# NEUE EUROPÄISCHE PATENTSCHRIFT

(11) **EP 2 596 041 B2**
(45) Veröffentlichungstag und Bekanntmachung des Hinweises auf die Entscheidung über den Einspruch: **12.06.2019**
(45) Hinweis auf die Patenterteilung: 20.08.2014
(21) Anmeldenummer: 11732474.9
(22) Anmeldetag: 15.07.2011
(51) Int. Cl.: C08G 18/38, C08G 18/78, C08G 18/79, G02B 1/04, C08G 18/66, C08G 18/76, C08G 18/09, C08G 18/42

(54) **POLYURETHANE MIT HOHER LICHTBRECHUNG**
POLYURETHANE HAVING HIGH LIGHT REFRACTION
POLYURÉTHANES À RÉFRACTION ÉLEVÉE

(30) Priorität: 20.07.2010 DE 102010031684
(43) Veröffentlichungstag der Anmeldung: 29.05.2013
(73) Patentinhaber: Covestro Deutschland AG, 51373 Leverkusen (DE)
(72) Erfinder: LAAS, Hans-Josef, 51519 Odenthal (DE); GRESZTA-FRANZ, Dorota, 42659 Solingen (DE); HALPAAP, Reinhard, 51519 Odenthal (DE); MAGER, Dieter, 51373 Leverkusen (DE); MEIER-WESTHUES, Hans-Ulrich, 51379 Leverkusen (DE)
(74) Vertreter: Levpat
(86) Internationale Anmeldenummer: PCT/EP2011/062181
(87) Internationale Veröffentlichungsnummer: WO 2012/010526

(56) Entgegenhaltungen:
- EP-A1- 0 182 996
- EP-A1- 0 235 743
- EP-A1- 2 083 029
- EP-A2- 1 426 393
- DE-A1- 19 618 230
- JP-A- H01 131 166
- US-A- 4 731 415
- US-A1- 2004 059 082
- US-A1- 2007 003 768

## Beschreibung

Die Herstellung lichtechter und wetterbeständiger Kunststoffe durch Umsetzung von aliphatischen bzw. cycloaliphatischen Polyisocyanaten mit Verbindungen, die acide Wasserstoffatome enthalten, ist bekannt. In Abhängigkeit von der Art der H-aciden Reaktionspartner, wie z. B. Polyolen, Polyaminen und/oder Polythiolen, entstehen hierbei Polyadditionsprodukte mit beispielsweise Urethan-, Harnstoff und/oder Thiourethanstrukturen.

Synonym für die Vielzahl unterschiedlicher Polymere, die sich aus Polyisocyanaten und H-aciden Verbindungen herstellen lassen, wird im Folgenden auch der allgemeine Begriff "Polyurethane" verwendet.

Für verschiedene Anwendungen, beispielsweise als leichtgewichtiger Ersatz für mineralisches Glas zur Herstellung von Scheiben für Automobil- und Flugzeugbau oder als Vergussmassen für optische, elektronische oder optoelektronische Bauteile, ist heute im Markt ein zunehmendes Interesse an transparenten, lichtechten Polyurethanmassen zu verzeichnen.

Insbesondere für hochwertige optische Anwendungen, wie z. B. für Linsen oder Brillengläser, besteht allgemein der Wunsch nach Kunststoffmaterialien, die eine hohe Lichtbrechung und gleichzeitig eine geringe Dispersion (hohe Abbe-Zahl) aufweisen.

Die Herstellung von transparenten Polyurethanmassen mit hohem Brechungsindex wurde bereits vielfach beschrieben. In der Regel kommen dabei als Polyisocyanatkomponenten sogenannte araliphatische Diisocyanate zum Einsatz, d. h. solche Diisocyanate, deren Isocyanatgruppen über aliphatische Reste an einem aromatischen System gebunden vorliegen. Aufgrund ihrer aromatischen Strukturen ergeben araliphatische Diisocyanate Polyurethane, die einen erhöhten Brechungsindex aufweisen, gleichzeitig garantieren die aliphatisch gebundenen Isocyanatgruppen die für hochwertige Anwendungen benötigte Lichtechtheit und geringe Vergilbungsneigung.

US-A 4 680 369 und US-A 4 689 387 beschreiben beispielsweise als Linsenmaterialien geeignete Polyurethane bzw. Polythiourethane, bei deren Herstellung zur Erzielung besonders hoher Brechungsindices spezielle Schwefel enthaltende Polyole bzw. mercaptofunktionelle aliphatische Verbindungen mit araliphatischen Diisocyanaten, wie z. B. 1,3-Bis(isocyanatomethyl)-benzol (m-Xylylendiisocyanat, m-XDI), 1,4-Bis(isocyanatomethyl)benzol (p-Xylylendiisocyanat, p-XDI), 1,3-Bis(2-isocyanatopropan-2-yl)benzol (m-Tetramethylxylylendiisocyanat, m-TMXDI) oder 1,3-Bis(isocyanatomethyl)-2,4,5,6-tetrachlorbenzol kombiniert werden.

Araliphatische Diisocyanate, wie m- und p-XDI oder m-TMXDI, werden auch in einer Vielzahl weiterer Veröffentlichungen, wie z. B. der EP-A 0 235 743, EP-A 0 268 896, EP-A 0 271 839, EP-A 0 408 459, EP-A 0 506 315, EP-A 0 586 091 und EP-A 0 803 743, als die bevorzugten Polyisocyanatkomponente zur Herstellung hochbrechender Linsenmaterialien genannt. Sie dienen dabei als Vernetzerkomponenten für Polyole und/oder Polythiole und ergeben in Abhängigkeit vom Reaktionspartner transparente Kunststoffe mit hohen Brechungsindices im Bereich von 1,56 bis 1,67 und vergleichsweise hohen Abbe-Zahlen bis zu 45.

Allen bisher genannten Verfahren zur Herstellung hoch lichtbrechender Polyurethanmassen für optische Anwendungen gemeinsam ist aber der erhebliche Nachteil, dass sie mit grossen Mengen niedermolekularer monomerer araliphatischer Diisocyanate arbeiten, die als gesundheitsschädliche, sensibilisierende oder sogar giftige Arbeitsstoffe eingestuft sind und zum Teil einen hohen Dampfdruck aufweisen. Die Verarbeitung dieser monomeren Diisocyanate erfordert aus Gründen der Arbeitshygiene einen großen sicherheitstechnischen Aufwand. Darüberhinaus besteht die Möglichkeit, dass insbesondere bei Verwendung eines Polyisocyanatüberschusses, wie z. B. in EP-A 0 235 743 oder der EP-A 0 506 315 vorgeschlagen, nicht abreagiertes monomeres Diisocyanat für längere Zeit im hergestellten Formteil, z. B. einem Brillenglas, verbleibt und aus diesem langsam ausdampfen kann.

Der Hauptgrund für den Einsatz der araliphatischen Diisocyanate in monomerer Form besteht darin, dass die bekannten monomerenarmen Derivate dieser Diisocyanate bei Raumtemperatur extrem hochviskose, zumeist sogar feste Verbindungen darstellen, von denen man bisher annahm, dass sie als solche für lösemittelfreie Anwendungen wie zur Herstellung von Vergussmassen nicht geeignet sind. Dementsprechend finden monomerenarme Polyisocyanate auf Basis araliphatischer Diisocyanate heute auch ausschließlich in organischen Lösungsmitteln gelöst, z. B. für Lacke, Klebstoffe oder Druckfarben, Verwendung.

Aufgabe der vorliegenden Erfindung war es daher, neue hochtransparente, licht- und wetterbeständige Polyurethanmassen mit hoher Lichtbrechung und geringer Dispersion zur Verftigung zu stellen, die nicht die Nachteile der bekannten Systeme aufweisen. Die neuen Polyurethanmassen sollten auf toxikologisch unbedenklichen Rohstoffen basieren und sich nach üblichen Methoden, beispielsweise durch einfaches Vergießen von Hand oder mit Hilfe geeigneter Maschinen, beispielsweise nach dem RIM-Verfahren, zu hochvernetzten transparenten Formkörpern insbesondere für hochwertige optische Anwendungen verarbeiten lassen.

Diese Aufgabe konnte durch die Bereitstellung der nachfolgend näher beschriebenen Polyurethane gelöst werden.

Die nachfolgend näher beschriebene Erfindung beruht auf der überraschenden Beobachtung, dass lösemittelfreie monomerenarme Polyisocyanate auf Basis araliphatischer Diisocyanate, die bei Raumtemperatur extrem hochviskos oder sogar fest sind, bereits durch leichtes Erwärmen auf vergleichsweise moderate Temperaturen von z. B. 50°C in ihren Viskositäten soweit abgesenkt werden können, dass sie sich unter üblichen Bedingungen problemlos zu lichtechten, nicht vergilbenden Polyurethankörpern verarbeiten lassen, die sich durch eine hohe Lichtbrechung und gleichzeitig hohe Abbe-Zahl auszeichnen. Dies war keineswegs zu erwarten, da beispielsweise von monomerenarmen Polyisocyanaten auf Basis cycloaliphatischer oder aromatischer Diisocyanate, die in lösemittelfreier Form ebenfalls Feststoffe darstellen, bekannt ist, dass sie Erwiechungspunkte bzw. Schmelztemperaturen in einem Bereich deutlich oberhalb 80°C besitzen.

Obwohl sich beispielsweise in EP-A 0 329 388 und EP-A 0 378 895, die Verfahren zur Herstellung von Polythiourethan- bzw. Polyurethankunststofflinsen zum Gegenstand haben, neben umfangreichen Listen potentiell als Aufbaukomponenten geeigneter Diisocyanate, die u. a. araliphatische Diisocyanate, wie z. B. XDI, Bis(isocyanatoethyl)benzol, Bis(isocyanatopropyl)-benzol, TMXDI, Bis(isocyanatobutyl)benzol, Bis(isocyanatomethyl)naphthalin oder Bis(isocyanatomethyl)diphenylether umfassen, auch der pauschale Hinweis findet, dass Prepolymere, Urethane, Carbodiimide, Harnstoffe, Biurete, Dimerisate und Trimerisate der genannten Diisocyanate ebenfalls geeignete Ausgangspolyisocyanate zur Herstellung von Linsenmaterialien darstellen, konnte der Fachmann diesen Veröffentlichungen keinerlei konkreten Hinweis auf die besondere Eignung der nachfolgend näher beschriebenen monomerarmen araliphatischen Polyisocyanate zur Herstellung von Kunststoffmassen mit hohem Brechungsindex entnehmen. Vielmehr wurden auch die Beispiele dieser Veröffentlichungen ausschließlich unter Verwendung monomerer Diisocyanate, darunter m-XDI und m-TMXDI, durchgeführt.

Gegenstand der vorliegenden Erfindung ist die Verwendung lösemittelfreier Polyisocyanatkomponenten A), die auf eine Temperatur von mindestens 50 °C vorgeheizt sind und die aus mindestens zwei Molekülen 1,3-Bis(isocyanatomethyl)benzol aufgebaut sind und einen Gehalt an Isocyanatgruppen von 10 bis 22 Gew.-% sowie einen Gehalt an monomeren Diisocyanaten von weniger als 1,0 Gew.-% aufweisen, zur Herstellung lichtechter kompakter oder geschäumter Polyurethankörper.

Gegenstand der Erfindung ist auch ein Verfahren zur Herstellung lichtechter Polyurethanmassen durch lösemittelfreie Umsetzung von
1. A) einer Polyisocyanatkomponente auf eine Temperatur von mindestens 50 °C vorgeheizt ist, die aus mindestens zwei Molekülen 1,3-Bis(isocyanatomethyl)benzol aufgebaut ist und einen Gehalt an Isocyanatgruppen von 10 bis 22 Gew.-% sowie einen Gehalt an monomeren Diisocyanaten von weniger als 1,0 Gew.-% aufweist, mit
2. B) gegenüber Isocyanatgruppen reaktiven Reaktionspartnern einer mittleren Funktionalität von 2,0 bis 6,0 und gegebenenfalls unter Mitverwendung
3. C) weiterer Hilfs- und Zusatzmittel,
unter Einhaltung eines Äquivalentverhältnisses von Isocyanatgruppen zu gegenüber Isocyanaten reaktiven Gruppen von 0,5 : 1 bis 2,0 : 1.

Gegenstand der Erfindung sind schließlich auch die aus den so erhältlichen lichtechten Polyurethanmassen hergestellten transparenten kompakten oder geschäumten Formkörper.

Bei der Polyisocyanatkomponente A) handelt es sich um Uretdion-, Isocyanurat-, Iminooxadiazindion-, Urethan-, Allophanat-, Biuret- und/oder Oxadiazintriongruppen enthaltende Polyisocyanate auf Basis araliphatischer Diisocyanate, die bei 23°C in fester Form vorliegen oder eine Viskosität von mehr als 150.000 mPas aufweisen, und deren Gehalt an Isocyanatgruppen von 10 bis 22 Gew.-% und an monomeren araliphatischen Diisocyanaten weniger als 1,0 Gew.-% beträgt.

Ein geeignetes araliphatisches Ausgangsdiisocyanat zur Herstellung der Polyisocyanatkomponenten A) ist 1,3-Bis(isocyanatomethyl)benzol (m-Xylylendiisocyanat, m-XDI).

Die Herstellung der Polyisocyanatkomponenten A) aus den genannten araliphatischen Diisocyanaten kann nach den üblichen Verfahren zur Oligomerisierung von Diisocyanaten, wie sie z. B. *in* Laas et al., J. Prakt. Chem. 336, 1994, 185-200 beschrieben sind, und anschließende Abtrennung der nicht umgesetzten monomeren Diisocyanate durch Destillation oder Extraktion erfolgen. Konkrete Beispiele für monomerenarme Polyisocyanate araliphatischer Diisocyanate finden sich beispielsweise in JP-A 2005161691, JP-A 2005162271 und EP-A 0 081 713.

Bevorzugt Polyisocyanate A) sind solche mit Uretdion-, Allophanat-, Isocyanurat-, Iminooxadiazindion- und/oder Biuretstruktur.

Besonders bevorzugt handelt es sich bei den Polyisocyanaten A) um solche der vorstehend beschriebenen Art auf Basis von m-XDI mit einem Gehalt an Isocyanatgruppen von 11 bis 21,5 Gew.-% und einem Gehalt an monomeren Diisocyanaten von weniger als 0,8 %.

Ganz besonders bevorzugte Polyisocyanate der Komponente A) sind solche der vorstehend beschriebenen Art auf Basis von m-XDI mit einem Gehalt an Isocyanatgruppen von 15 bis 21 Gew.-% und einem Gehalt an monomerem m-XDI von weniger als 0,5 %.

Die zur Herstellung der Polyisocyanatkomponente A) eingesetzten araliphatischen Ausgangsdiisocyanate können nach beliebigen Verfahren, z. B. durch Phosgenierung in der Flüssigphase oder Gasphase oder auf phosgenfreiem Weg, beispielsweise durch Urethanspaltung, hergestellt werden.

Die monomerenarme Polyisocyanate A) stellen in der Regel klare, praktisch farblose feste Harze dar, deren Viskosität bei 23°C mehr als 150.000 mPas beträgt und deren Gehalt an Isocyanatgruppen vorzugsweise von 11 bis 21 Gew.-%, besonders bevorzugt von 15 bis 21 Gew.-%, und deren mittlere Isocyanat-Funktionalität vorzugsweise von 2,2 bis 5,0, besonders bevorzugt 3,0 bis 4,5, beträgt. Die Polyisocyanate A) sind arm an Restmonomeren, da sie einen Restgehalt an monomeren araliphatischen Diisocyanaten von weniger als 1,0 Gew.-%, vorzugsweise weniger als 0,8 Gew.-%, besonders bevorzugt weniger als 0,5 Gew.-% aufweisen.

Zur Herstellung der erfindungsgemäßen lichtechten Polyurethanmassen, werden die vorstehend beschriebenen Polyisocyanate A) mit beliebigen lösemittelfreien gegenüber Isocyanatgruppen reaktiven Reaktionspartnern B) umgesetzt, die eine im Sinne der Isocyanat-Additionsreaktion mittlere Funktionalität von 2,0 bis 6,0, vorzugsweise von 2,5 bis 4,0, besonders bevorzugt von 2,5 bis 3,5 aufweisen.

Hierbei handelt es sich insbesondere um die üblichen aus der Polyurethanchemie bekannten Polyetherpolyole, Polyesterpolyole, Polyetherpolyesterpolyole, Polythioetherpolyole, polymermodifizierte Polyetherpolyole, Pfropfpolyetherpolyole, insbesondere solche auf Styrol- und/oder Acrylnitrilbasis, Polyetherpolyamine, hydroxylgruppenhaltigen Polyacetale und/oder hydroxylgruppenhaltigen aliphatischen Polycarbonate, die üblicherweise ein Molekulargewicht von 106 bis 12000, vorzugsweise 250 bis 8000 aufweisen. Ein breiter Überblick über geeignete Reaktionspartner B) findet sich beispielsweise in N. Adam et al.: "Polyurethanes", Ullmann's Encyclopedia of Industrial Chemistry, Electronic Release, 7th ed., chap. 3.2 - 3.4, Wiley-VCH, Weinheim 2005.

Geeignete Polyetherpolyole B) sind beispielsweise solche der in der DE-A 2 622 951, Spalte 6, Zeile 65 - Spalte 7, Zeile 47, oder der EP-A 0 978 523 Seite 4, Zeile 45 bis Seite 5, Zeile 14 genannten Art, sofern sie den oben gemachten Angaben hinsichtlich Funktionalität und Molekulargewicht entsprechen. Besonders bevorzugte Polyetherpolyole B) sind Anlagerungsprodukte von Ethylenoxid und/oder Propylenoxid an Glycerin, Trimethylolpropan, Ethylendiamin und/oder Pentaerythrit.

Geeignete Polyesterpolyole B) sind beispielsweise solche der in der EP-A 0 978 523 Seite 5, Zeilen 17 bis 47 oder der EP-A 0 659 792 Seite 6, Zeilen 8 bis 19 genannten Art, sofern sie den oben gemachten Angaben entsprechen, bevorzugt solche, deren Hydroxylzahl von 20 bis 650 mg KOH/g beträgt.

Geeignete Polythiopolyole B) sind beispielsweise die bekannten Kondensationsprodukte von Thiodiglykol mit sich selbst oder anderen Glykolen, Dicarbonsäuren, Formaldehyd, Aminocarbonsäuren und/oder Aminoalkoholen. Je nach Art der eingesetzten Mischkomponenten handelt es sich bei diesen um Polythiomischetherpolyole, Polythioetheresterpolyole oder Polythioetheresteramidpolyole.

Als Komponente B) geeignete Polyacetalpolyole sind beispielsweise die bekannten Umsetzungsprodukte einfacher Glykole, wie z. B. Diethylenglykol, Triethylenglykol, 4,4'-Dioxethoxy-diphenyl-dimethylmethan (Addukt von 2 mol Ethylenoxid an Bisphenol A) oder Hexandiol, mit Formaldehyd oder auch durch Polykondensation cyclischer Acetale, wie z. B. Trioxan, hergestellte Polyacetale.

Darüber hinaus sind als Komponente B) auch Aminopolyether oder Gemische von Aminopolyethern gut geeignet, d. h. Polyether mit gegenüber Isocyanatgruppen reaktionsfähigen Gruppen, die sich zumindest zu 50 Äquivalent-%, vorzugsweise zumindest zu 80 Äquivalent-%, aus primären und/oder sekundären, aromatisch oder aliphatisch gebundenen Aminogruppen und zum Rest aus primären und/oder sekundären, aliphatisch gebundenen Hydroxylgruppen zusammensetzen. Geeignete derartige Aminopolyether sind beispielsweise die in EP-A 0 081 701, Spalte 4, Zeile 26 bis Spalte 5, Zeile 40, genannten Verbindungen. Ebenfalls als Ausgangskomponente E) geeignet sind aminofunktionelle Polyetherurethane oder -harnstoffe, wie sie sich beispielsweise nach dem Verfahren der DE-A 2 948 419 durch Hydrolyse von isocyanatfunktionellen Polyetherprepolymeren herstellen lassen oder auch Aminogruppen aufweisende Polyester des oben genannten Molekulargewichtsbereichs.

Weitere geeignete gegenüber Isocyanatgruppen reaktive Komponenten B) sind beispielsweise auch die in EP-A 0 689 556 und EP-A 0 937 110 beschriebenen, z. B. durch Umsetzung epoxidierter Fettsäureester mit aliphatischen oder aromatischen Polyolen unter Epoxidringöffung erhältlichen speziellen Polyole.

Auch Hydroxylgruppen enthaltende Polybutadiene können gegebenenfalls als Komponente B) eingesetzt werden.

Zur Herstellung von Polyurethanmassen ganz besonders hoher Lichtbrechung eignen sich als gegenüber Isocyanatgruppen reaktive Komponenten B) insbesondere auch Polythioverbindungen, beispielsweise einfache Alkanthiole, wie z. B. Methandithiol, 1,2-Ethandithiol, 1,1-Propandithiol, 1,2-Propandithiol, 1,3-Propandithiol, 2,2-Propandithiol, 1,4-Butandithiol, 2,3-Butandithiol, 1,5-Pentandithiol, 1,6-Hexandithiol, 1,2,3-Propantrithiol, 1,1-Cyclohexandithiol, 1,2-Cyclohexandithiol, 2,2-Dimethylpropan-1,3-dithiol, 3,4-Dimethoxybutan-1,2-dithiol und 2-Methylcyclohexan-2,3-dithiol, Thioethergruppen enthaltende Polythiole, wie z. B. 2,4-Dimer-captomethyl-1,5-dimercapto-3-thiapentan, 4-Mercaptomethyl-1,8-dimercapto-3,6-dithiaoctan, 4,8-Dimercaptomethyl-1,11-dimercapto-3,6,9-trithiaundecan, 4,7-Dimercaptomethyl-1,11-dimercapto-3,6,9-trithiaundecan, 5,7-Dimercaptomethyl-1,11-dimercapto- 3,6, 9-trithiaundecan, 4,5-Bis(mercaptoethylthio)-1,10-dimercapto-3,8-dithiadecan, Tetrakis(mercaptomethyl)methan, 1,1,3,3-Tetrakis(mercaptomethylthio)propan, 1,1,5,5-Tetrakis(mercaptomethylthio)-3-thiapentan, 1,1,6,6-Tetrakis(mercaptomethylthio)-3,4-dithiahexan, 2-Mercaptoethylthio-1,3-dimercaptopropan, 2,3-Bis(mercaptoethylthio)-1-mercaptopropan, 2,2-Bis(mer)-1,3-dimercaptopropan, Bis(mercaptomethyl)sulfid, Bis(mercaptomethyl)disulfid, Bis(mercaptoethyl)sulfid, Bis(mercaptoethyl)disulfid, Bis(mercaptopropyl)sulfid, Bis(mercaptopropyl)disulfid, Bis(mercaptomethylthio)methan, Tris(mercaptomethylthio)methan, Bis(mercaptoethylthio)methan, Tris(mercaptoethylthio)methan, Bis(mercaptopropylthio)methan, 1,2-Bis(mercaptomethylthio)ethan, 1,2-Bis(mercaptoethylthio)ethan, 2-Mercaptoethylthio)ethan, 1,3-Bis(mercaptomethylthio)propan, 1,3-Bis(mercaptopropylthio)propan, 1,2,3-Tris(mercaptomethylthio)propan, 1,2,3-Tris(mercaptoethylthio)propan, 1,2,3-Tris(mercaptopropylthio)propan, Tetrakis(mercaptomethylthio)methan, Tetrakis(mercaptoethylthiomethyl)methan, Tetrakis(mercaptopropylthiomethyl)methan, 2,5-Di-mercapto-1,4-dithlan, 2,5-Bis(mercaptomethyl)-I,4-dithian und dessen gemäß JP-A 07118263 erhältliche Oligomere, 1,5-Bis(mercaptopropyl)-1,4-dithian, 1,5-Bis(2-mercaptoethylthiomethyl)-1,4-dithian, 2-Mercaptomethyl-6-mercapto-1,4-dithiacycloheptan, 2,4,6-Trimercapto-1,3,5-trithian, 2,4,6-Trimercaptomethyl-1,3,5-trithian und 2-(3-Bis(mercaptomethyl)-2-thiapropyl)-1,3-dithiolan, Polyesterthiole, wie z. B. Ethylenglycol-bis(2-mercaptoacetat), Ethylenglycol-bis(3-mercaptopropionat), Diethylenglycol(2-mercaptoacetat), Diethylenglycol(3-mercaptopropionat), 2,3-Dimercapto-1-propanol(3-mercaptopropionat), 3-Mercapto-1,2-propandiol-bis(2-mercaptoacetat), 3-Mercapto-1,2-propandiol-bis(3-mercaptopropionat), Trimethylolpropan-tris(2-mercaptoacetat), Trimethylolpropan-tris(3-mercaptopropionat), Trimethylolethan-tris(2-mercaptoacetat), Trimethylolethan-tris(3-mercaptopropionat), Pentaerythrit-tetrakis(2-mercaptoac etat), Pentaerythrit-tetrakis(3-mercaptopropionat), Glycerin-tris(2-mercaptoacetat), Glycerin-tris(3-mercaptopropionat), 1,4-Cyclohexandiol-bis(2-mercaptoacetat), 1,4-Cyclohexandiol-bis(3-mercaptopropionat), Hydroxymethylsulfid-bis(2-mercaptoacetat), Hydroxymethylsulfid-bis(3-mercaptopropionat), Hydroxyethylsulfid(2-mercaptoacetat), Hydroxyethylsulfid(3-mercaptopropionat), Hydroxymethyldisulfid(2-mercaptoacetat), Hydroxymethyldisulfid(3-mercaptopropionat), (2-Mercaptoethylester)thioglycolat und Bis(2-mercaptoethylester)thiodipropionat sowie aromatische Thioverbindungen, wie z. B. 1,2-Dimercaptobenzol, 1,3-Dimercaptobenzol, 1,4-Dimercaptobenzol, 1,2-Bis(mercaptomethyl)benzol, 1,4-Bis(mercaptomethyl)benzol, 1,2-Bis(mercaptoethyl)benzol, 1,4-Bis(mercaptoethyl)benzol, 1,2,3-Trimercaptobenzol, 1,2,4-Trimercaptobenzol, 1,3,5-Trimercaptobenzol, 1,2,3-Tris(mercaptomethyl)benzol, 1,2,4-Tris(mercaptomethyl)benzol, 1,3,5-Tris(mercaptomethyl)benzol, 1,2,3-Tris(mercaptoethyl)benzol, 1,3,5-Tris(mercaptoethyl)benzol, 1,2,4-Tris(mercaptoethyl)benzol, 2,5-Toluoldithiol, 3,4-Toluoldithiol, 1,4-Naphthalindithiol, 1,5-Naphthalindithiol, 2,6-Naphthalindithiol, 2,7-Naphthalindithiol, 1,2,3,4-Tetramercaptobenzol, 1,2,3,5-Tetramercaptobenzol, 1,2,4,5-Tetramercaptobenzol, 1,2,3,4-Tetrakis(mercaptomethyl)benzol, 1,2,3,5-Tetrakis(mercaptomethyl)benzol, 1,2,4,5-Tetrakis(mercaptomethyl)benzol, 1,2,3,4-Tetrakis(mercaptoethyl)benzol, 1,2,3,5-Tetrakis(mercaptoethyl)benzol, 1,2,4,5-Tetrakis(mercaptoethyl)benzol, 2,2'-Dimercaptobiphenyl und 4,4'-Dimercaptobiphenyl.

Bevorzugte Polythioverbindungen B) sind Polythioether- und Polyesterthiole der genannnten Art. Besonders bevorzugte Polythioverbindungen B) sind 4-Mercaptomethyl-1,8-dimercapto-3,6-dithiaoctan, 2,5-Bismercaptomethyl-1,4-dithian, 1,1,3,3-Tetrakis(mercaptomethylthio)-propan, 5,7-Dimercaptomethyl-1,11-dimercapto-3,6,9-trithiaundecan, 4,7-Dimercaptomethyl-1,11-dimercapto-3,6,9-trithiaundecan, 4,8-Dimercaptomethyl-1,11-dimercapto-3,6,9-trithiaun-decan, Trimethylolpropan-tris(3-mercaptopropionat), Trimethylolethan-tris(2-mercaptoacetat), Pentaerythrit-tetrakis(2-mercaptoacetat) und Pentaerythrit-tetrakis(3-mercaptopropionat).

Darüber hinaus sind als gegenüber Isocyanatgruppen reaktive Komponenten B) auch Schwefel enthaltende Hydroxyverbindungen geeignet. Beispielhaft seien hier genannt einfache Mercaptoalkohole, wie z. B. 2-Mercaptoethanol, 3-Mercaptopropanol, 1,3-Dimercapto-2-propanol, 2,3-Dimercaptopropanol und Dithioerythritol, Thioetherstrukturen enthaltende Alkohole, wie z. B. Di(2-hydroxyethyl)sulfid, 1,2-Bis(2-hydroxyethylmercapto)ethan, Bis(2-hydroxyethyl)disulfid und 1,4-Dithian-2,5-diol, oder Schwefel enthaltende Diole mit Polyesterurethan-, Polythioesterurethan-, Polyesterthiourethan- oder Polythioesterthiourethanstruktur der in der EP-A 1 640 394 genannten Art.

Bei der Herstellung der erfindungsgemäßen lichtechten Polyurethanmassen können als gegenüber Isocyanaten reaktive Verbindungen B) auch niedermolekulare, hydroxy- und/oder aminofunktionelle Komponenten, d. h. solche eines Molekulargewichtsbereiches von 60 bis 500, vorzugsweise von 62 bis 400, zum Einsatz kommen.

Hierbei handelt es sich beispielsweise um einfache ein- oder mehrwertige Alkohole mit 2 bis 14, vorzugsweise 4 bis 10 Kohlenstoffatomen, wie z. B. 1,2-Ethandiol, 1,2- und 1,3-Propandiol, die isomeren Butandiole, Pentandiole, Hexandiole, Heptandiole und Octandiole, 1,10-Decandiol, 1,2- und 1,4-Cyclohexandiol, 1,4-Cyclohexandimethanol, 4,4'-(1-Methylethyliden)-biscyclo-hexanol, 1,2,3-Propantriol, 1,1,1-Trimethylolethan, 1,2,6-Hexantriol, 1,1,1-Trimethylolpropan, 2,2-Bis(hydroxymethyl)-l,3-propandiol, Bis-(2-hydroxyethyl)-hydrochinon, 1,2,4- und 1,3,5-Trihydroxycyclohexan oder 1,3,5-Tris(2-hydroxyethyl)-isocyanurat.

Beispiele für geeignete niedermolekulare aminofunktionelle Verbindungen sind beispielsweise aliphatische und cycloaliphatische Amine und Aminoalkohole mit primär und/oder sekundär gebundenen Aminogruppen, wie z. B. Cyclohexylamin, 2-Methyl-l,5-pentandiamin, Diethanolamin, Monoethanolamin, Propylamin, Butylamin, Dibutylamin, Hexylamin, Monoisopropanolamin, Diisopropanolamin, Ethylendiamin, 1,3-Diaminopropan, 1,4-Diaminobutan, Isophorondiamin, Diethylentriamin, Ethanolamin, Aminoethylethanolamin, Diaminocyclohexan, Hexamethylendiamin, Methyliminobispropylamin, Iminobispropylamin, Bis(aminopropyl)piperazin, Aminoethylpiperazin, 1,2-Diaminocyclohexan, Triethylentetramin, Tetraethylenpentamin, 1,8-p-Diaminomenthan, Bis(4-aminocyclohexyl)methan, Bis(4-amino-3-methylcyclohexyl)methan, Bis(4-amino-3,5-dimethylcyclohexyl)methan, Bis(4-amino-2,3,5-trimethylcyclohexyl)methan, 1,1-Bis(4-aminocyclohexyl)propan, 2,2-Bis(4-aminocyclohexyl)propan, 1,1-Bis(4-aminocyclohexyl)ethan, 1,1-Bis(4-aminocyclohexyl)butan, 2,2-Bis(4-aminocyclohexyl)butan, 1,1-Bis(4-amino-3-methylcyclohexyl)ethan, 2,2-Bis(4-amino-3-methylcyclohexyl)propan, 1,1-Bis(4-amino-3,5-dimethylcyclohexyl)ethan, 2,2-Bis(4-amino-3,5-dimethylcyclohexyl)propan, 2,2-Bis(4-amino-3,5-dimethylcyclohexyl)butan, 2,4-Diaminodicyclohexylmethan, 4-Aminocyclohexyl-4-amino-3-methylcyclohexylmethan, 4-Amino-3,5-dimethylcyclohexyl-4-amino-3-methylcyclohexylmethan und 2-(4-Aminocyclohexyl)-2-(4-amino-3-methylcyclohexyl)methan.

Beispiele für aromatische Polyamine, insbesondere Diamine, mit Molekulargewichten unter 500, die geeignete gegenüber Isocyanaten reaktive Verbindungen B) darstellen, sind z. B. 1,2- und 1,4-Diaminobenzol, 2,4- und 2,6-Diaminotoluol, 2,4'- und/oder 4,4'-Diaminodiphenylmethan, 1,5-Diaminonaphthalin, 4,4',4"-Triaminotriphenylmethan, 4,4'-Bis-(methylamino)-diphenylmethan oder 1-Methyl-2-methylamino-4-aminobenzol. 1-Methyl-3,5-diethyl-2,4-diaminobenzol, 1-Methyl-3,5-diethyl-2,6-diaminobenzol, 1,3,5-Trimethyl-2,4-diaminobenzol, 1,3,5-Triethyl-2,4-diaminobenzol, 3,5,3',5'-Tetraethyl-4,4'-diaminodiphenylmethan, 3,5,3',5'-Tetraisopropyl-4,4'-diaminodiphenylmethan, 3,5-Diethyl-3',5'-düsopropyl-4,4'-diaminodiphenylmethan, 3,3'-Diethyl-5,5'-diisopropyl-4,4'-diaminodiphenylmethan, 1-Methyl-2,6-diamino-3-isopropylbenzol, flüssige Gemische von Polyphenylpolymethylenpolyaminen, wie sie auf bekannte Weise durch Kondensation von Anilin mit Formaldehyd erhältlich sind, sowie beliebige Mischungen solcher Polyamine. In diesem Zusammenhang seien beispielsweise Mischungen von 1-Methyl-3,5-diethyl-2,4-diaminobenzol mit 1-Methyl-3,5-diethyl-2,6-diaminobenzol in einem Gewichtsverhältnis von 50 : 50 bis 85 : 15, vorzugsweise von 65 : 35 bis 80 : 20 besonders erwähnt.

Die Verwendung niedermolekularer aminofunktioneller Polyether mit Molekulargewichten unter 500 ist ebenfalls möglich. Hierbei handelt es sich beispielsweise um solche mit primären und/oder sekundären, aromatisch oder aliphatisch gebundenen Aminogruppen, deren Aminogruppen gegebenenfalls über Urethan- oder Estergruppen an die Polyetherketten angebunden sind und die nach bekannten, bereits oben zur Herstellung der höhermolekularen Aminopolyether beschriebenen Verfahren zugänglich sind.

Gegebenenfalls können auch sterisch gehinderte aliphatische Diamine mit zwei sekundär gebundenen Aminogruppen als gegenüber Isocyanatgruppen reaktive Komponenten B) eingesetzt werden, wie z. B. die aus EP-A 0 403 921 bekannten Umsetzungsprodukte aliphatischer und/oder cycloaliphatischer Diamine mit Maleinsäure- oder Fumarsäureestern, das gemäß der Lehre der EP-A 1 767 559 erhältliche Bisaddukt von Acrylnitril an Isophorondiamin oder die beispielsweise in der DE-A 19 701 835 beschriebenen Hydrierungsprodukte aus aliphatischen und/oder cycloaliphatischen Diaminen und Ketonen, wie z. B. Diisopropylketon, zugänglicher Schiffscher Basen.

Bevorzugte Reaktionspartner B) für die Polyisocyanatgemische A) sind die vorstehend genannten polymeren Polyetherpolylole, Polyesterpolyole und/oder Aminopolyether, die genannten Polythioverbindungen, niedermolekularen aliphatischen und cycloaliphatischen mehrwertigen Alkohole sowie die genannten niedermolekularen mehrwertigen Amine, insbesondere sterisch gehinderte aliphatische Diamine mit zwei sekundär gebundenen Aminogruppen.

Als Reaktionspartner für die Polyisocyanatgemische A) eignen sich auch beliebige Gemische der vorstehend beispielhaft genannten gegenüber Isocyanatgruppen reaktiven Komponenten B). Während unter Verwendung ausschließlich hydroxyfunktioneller Komponenten B) reine Polyurethanmassen, unter ausschließlicher Verwendung von Thioverbindungen B) reine Polythiourethane und unter ausschließlicher Verwendung von Polyaminen B) reine Polyharnstoffmassen erhalten werden, lassen sich unter Verwendung von Aminoalkoholen, Mercaptoalkoholen oder geeigneter Gemische von hydroxy-, mercapto- und aminofunktionellen Verbindungen als Komponente B) Polyadditionsverbindungen herstellen, in denen sich das Äquivalentverhältnis von Urethan- zu Thiourethan- und/oder Harnstoffgruppen beliebig einstellen lässt.

Die Polyisocyanatkomponenten A) kommen bei der Herstellung von lichtechten Polyurethanmassen in der Regel als alleinige Polyisocyanatkomponente zum Einsatz. Grundsätzlich ist es jedoch auch möglich, die Polyisocyanatkomponenten A) in Abmischung mit beliebigen weiteren lösemittelfreien monomerarmen Polyisocyanaten einzusetzen, beispielsweise den bekannten Lackpolyisocyanaten auf Basis von Hexamethylendiisocyanat (HDI) mit Uretdion-, Isocyanurat-, Allophanat-, Biuret-, Iminooxadiazindion- und/oder Oxadiazintrionstruktur, wie sie beispielsweise in J. Prakt. Chem. 336 (1994) 185 - 200 und EP-A 0 798 299 beispielhaft beschrieben sind, den aus EP-A 0 693 512 und EP-A 1 484 350 bekannten Lösungen cycloaliphatischer Polyisocyanate in niedrigviskosen HDI-Polyisocyanaten, den in EP-A 0 047 452 und EP-A 0 478 990 beschriebenen, durch Dimerisierung und/oder Trimerisierung aus Gemischen von HDI und Isophorondiisocyanat (IPDI) erhältlichen lösemittelfreien Polyisocyanaten oder Polyester-modifizierten HDI-Polyisocyanaten, der aus EP-A 0 336 205 bekannten Art.

Unabhängig von der Art der gewählten Ausgangsstoffe erfolgt beim erfindungsgemäßen Verfahren die Umsetzung der Polyisocyanatgemische A) mit den gegenüber Isocyanatgruppen reaktiven Komponenten B) unter Einhaltung eines Äquivalentverhältnisses von Isocyanatgruppen zu gegenüber Isocyanaten reaktiven Gruppen von 0,5 : 1 bis 2,0 : 1, vorzugsweise von 0,7 : 1 bis 1,3 : 1, besonders bevorzugt von 0,8 : 1 bis 1,2 : 1.

Neben den genannten Ausgangskomponeten A) und B) können dabei gegebenenfalls weitere Hilfs- und Zusatzmittel C), wie z. B. Katalysatoren, Treibmittel, oberflächenaktive Mittel, UV-Stabilisatoren, Schaumstabilisatoren, Antioxidantien, Formtrennmittel, Füllstoffe und Pigmente, mitverwendet werden.

Zur Reaktionsbeschleunigung können beispielsweise übliche aus der Polyurethanchemie bekannte Katalysatoren zum Einsatz kommen. Beispielhaft seien hier genannt tert. Amine, wie z. B. Triethylamin, Tributylamin, Dimethylbenzylamin, Diethylbenzylamin, Pyridin, Methylpyridin, Dicyclohexylmethylamin, Dimethylcyclohexylamin, N,N,N',N'-Tetramethyldiaminodiethylether, Bis-(dimethylaminopropyl)-harnstoff, N-Methyl- bzw. N-Ethylmorpholin, N-Cocomorpholin, N-Cyclohexylmorpholin, N,N,N',N'-Tetramethylethylendiamin, N,N,N',N'-Tetramethy-1,3-butandiamin, N,N,N',N'-Tetramethyl-1,6-hexandiamin, Pentamethyldiethylentriamin, N-Methylpiperidin, N-Dimethylaminoethylpiperidin, N,N'-Dimethylpiperazin, N-Methyl-N'-dimethylaminopiperazin, 1,8-Diazabicyclo(5.4.0)undecen-7 (DBU), 1,2-Dimethylimidazol, 2-Methylimidazol, N,N-Dimethylimidazol-β-phenylethylamin, 1,4-Diazabicyclo-(2,2,2)-octan, Bis-(N,N-dimethylaminoethyl)adipat; Alkanolaminverbindungen, wie z. B. Triethanolamin, Triisopropanolamin, N-Methyl- und N-Ethyl-diethanolamin, Dimethylaminoethanol, 2-(N,N-Dimethylaminoethoxy)ethanol, N,N',N"-Tris-(dialkylaminoalkyl)hexahydrotriazine, z.B. N,N',N"-Tris-(dimethylaminopropyl)-s-hexahydrotriazin und/oder Bis(dimethylaminoethyl)ether; Metallsalze, wie z. B. anorganische und/oder organische Verbindungen des Eisens, Bleis, Wismuths, Zinks, und/oder Zinns in üblichen Oxidationsstufen des Metalls, beispielsweise Eisen(II)-chlorid, Eisen(III)-chlorid, Wismut(III)- Wismut(III)-2-ethylhexanoat, Wismut(III)-octoat, Wismut(III)-neodecanoat, Zinkchlorid, Zink-2-ethylcaproat, Zinn(II)-octoat, Zinn(II)-ethylcaproat, Zinn(II)-palmitat, Dibutylzinn(IV)-dilaurat (DBTL), Dibutylzinn(IV)-dichlorid oder Bleioctoat; Amidine, wie z. B. 2,3-Dimethyl-3,4,5,6-tetrahydropyrimidin; Tetraalkylammoniumhydroxide, wie z. B. Tetramethylammoniumhydroxid; Alkalihydroxide, wie z. B. Natriumhydroxid und Alkalialkoholate, wie z. B. Natriummethylat und Kaliumisopropylat, sowie Alkalisalze von langkettigen Fettsäuren mit 10 bis 20 C-Atomen und gegebenenfalls seitenständigen OH-Gruppen.

Bevorzugte einzusetzende Katalysatoren C) sind tertiäre Amine Bismuth- und Zinnverbindungen der genannten Art.

Die beispielhaft genannten Katalysatoren können bei der Herstellung der erfindungsgemäßen lichtechten Polyurethan-, Polythiourethan- und/oder Polyharnstoffmassen einzeln oder in Form beliebiger Mischungen untereinander eingesetzt werden und kommen dabei gegebenenfalls in Mengen von 0,01 bis 5,0 Gew.-%, bevorzugt 0,1 bis 2 Gew.-%, berechnet als Gesamtmenge an eingesetzten Katalysatoren bezogen auf die Gesamtmenge der verwendeten Ausgangsverbindungen, zum Einsatz.

Nach dem erfindungsgemäßen Verfahren werden vorzugsweise transparente kompakte Formteile mit hohem Brechungsindex hergestellt. Durch Zusatz geeigneter Treibmittel lassen sich, wenn gewünscht, aber auch geschäumte Formkörper erhalten. Hierfür geeignete Treibmittel sind beispielsweise leicht flüchtige organische Substanzen, wie z.B. Aceton, Ethylacetat, halogensubstituierte Alkane, wie Methylenchlorid, Chloroform, Ethylidenchlorid, Vinylidenchlorid, Monofluortrichlormethan, Chlortrifluormethan oder Dichlordifluormethan, Butan, Hexan, Heptan oder Diethylether und/oder gelöste inerte Gase, wie z.B. Stickstoff, Luft oder Kohlendioxid.

Als chemische Treibmittel C), d. h. Treibmittel die aufgrund einer Reaktion, beispielsweise mit Isocyanatgruppen, gasförmige Produkte bilden, kommen beispielsweise Wasser, Hydratwasser enthaltende Verbindungen, Carbonsäuren, tert.-Alkohole, z. B. t-Butanol, Carbamate, beispielsweise die in der EP-A 1 000 955, insbesondere auf den Seiten 2, Zeilen 5 bis 31 sowie Seite 3, Zeilen 21 bis 42 beschriebenen Carbamate, Carbonate, z. B. Ammoniumcarbonat und/oder Ammoniumhydrogencarbonat und/oder Guanidincarbamat in Betracht. Eine Treibwirkung kann auch durch Zusatz von bei Temperaturen über Raumtemperatur unter Abspaltung von Gasen, beispielsweise von Stickstoff, sich zersetzenden Verbindungen, z. B. Azoverbindungen wie Azodicarbonamid oder Azoisobuttersäurenitril, erzielt werden. Weitere Beispiele für Treibmittel sowie Einzelheiten über die Verwendung von Treibmitteln sind im Kunststoff-Handbuch, Band VII, herausgegeben von Vieweg und Höchtlen, Carl-Hanser-Verlag, München 1966, z.B. auf den Seiten 108 und 109, 453 bis 455 und 507 bis 510 beschrieben.

Eine Treibwirkung kann auch durch Zusatz von bei Temperaturen über Raumtemperatur unter Abspaltung von Gasen, beispielsweise von Stickstoff, sich zersetzenden Verbindungen, z. B. Azoverbindungen wie Azodicarbonamid oder Azoisobuttersäurenitril, erzielt werden. Weitere Beispiele für Treibmittel sowie Einzelheiten über die Verwendung von Treibmitteln sind im Kunststoff-Handbuch, Band VII, herausgegeben von Vieweg und Höchtlen, Carl-Hanser-Verlag, München 1966, z.B. auf den Seiten 108 und 109, 453 bis 455 und 507 bis 510 beschrieben. Erfindungsgemäß können auch oberflächenaktive Zusatzstoffe C) als Emulgatoren und Schaumstabilisatoren mitverwendet werden. Geeignete Emulgatoren sind beispielsweise die Natriumsalze von Ricinusölsulfonaten oder Fettsäuren, Salze von Fettsäuren mit Aminen, wie z. B. ölsaures Diethylamin oder stearinsaures Diethanolamin. Auch Alkali- oder Ammoniumsalze von Sulfonsäuren, wie z. B. von Dodecylbenzolsulfonsäuren, Fettsäuren, wie z. B. Ricinolsäure, oder polymeren Fettsäuren, oder ethoxyliertes Nonylphenol können als oberflächenaktive Zusatzstoffe mitverwendet werden.

Geeignete Schaumstabilisatoren sind insbesondere die bekannten, vorzugsweise wasserlöslichen Polyethersiloxane, wie sie beispielsweise US-A 2 834 748, DE-A 1 012 602 und DE-A 1 719 238 beschrieben sind. Auch die gemäß DE-A 2 558 523 erhältlichen über Allophanatgruppen verzweigte Polysiloxan-Polyoxyalkylen-Copolymere stellen geeignete Schaumstabilisatoren dar.

Die vorstehend genannten, beim erfindungsgemäßen Verfahren gegebenenfalls mitzuverwendenden Emulgatoren und Stabilisatoren können sowohl einzeln als auch in beliebigen Kombinationen untereinander zum Einsatz kommen.

Die aus den erfindungsgemäß herstellbaren bzw. verwendbaren Polyurethanmassen erhaltenen Körper zeichnen sich bereits als solche, d. h. ohne Zusatz entsprechender Stabilisatoren, durch eine sehr gute Lichtbeständigkeit aus. Dennoch können bei ihrer Herstellung gegebenenfalls UV-Schutzmittel (Lichtstabilisatoren) oder Antioxidantien der bekannten Art als weitere Hilfs- und Zusatzmittel C) mitverwendet werden.

Geeignete UV-Stabilisatoren C) sind beispielsweise Piperidinderivate, wie z. B. 4-Benzoyloxy-2,2,6,6-tetramethylpiperidin, 4-Benzoyloxy-1,2,2,6,6-pentamethylpiperidin, Bis-(2,2,6,6-tetramethyl-4-piperidyl)sebacat, Bis(1,2,2,6,6-pentamethyl-4-piperidyl)sebacat, Methyl(1,2,2,6,6-pentamethyl-4-piperidyl)sebacat, Bis-(2,2,6,6-tetramethyl-4-piperidyl)-suberat oder Bis-(2,2,6,6-tetramethyl-4-piperidyl)-dodecandioat, Benzophenonderivate, wie z. B. 2,4-Dihydroxy-, 2-Hydroxy-4-methoxy-, 2-Hydroxy-4-octoxy-, 2-Hydroxy-4-dodecyloxy- oder 2,2'-Dihydroxy-4-dodecyloxy-benzophenon, Benztriazolderivate, wie z. B. 2-(5-Methyl-2-hydroxyphenyl)benztriazol, 2-(5-tert.-Butyl-2-hydroxyphenyl)benztriazol, 2-(5-tert.-Octyl-2-hydroxyphenyl)benztriazol, 2-(5-Dodecyl-2-hydroxyphenyl)benztriazol, 2-(3,5-Di-tert.-butyl-2-hydroxyphenyl)-5-chlorbenztriazol, 2-(3,5-Di-tert.-amyl-2-hydroxyphenyl)benztriazol, 2-(3,5-Di-tert.-butyl-2-hydroxyphenyl)benztriazol, 2-(3-tert.-Butyl-5-methyl-2-hydroxyphenyl)-5-chlorbenztriazol und Veresterungsprodukte von 2-(3-tert.-Butyl-5-propionsäure-2-hydroxyphenyl)benztriazol mit Polyethylenglykol 300, Oxalanilide, wie z. B. 2-Ethyl-2'-ethoxy- oder 4-Methyl-4'-methoxy-oxalanilid, Salicylsäureester, wie z. B. Salicylsäurephenylester, Salicylsäure-4-tert.-butylphenylester und Salicylsäure-4-tert.-octylphenylester, Zimtsäureesterderivate, wie z. B. a-Cyano-β-methyl-4-methoxyzimtsäuremethylester, a-Cyano-β-methyl-4-methoxyzimtsäurebutylester, α-Cyano-β-phenylzimtsäureethylester und α-Cyano-β-phenylzimtsäureisooctylester, oder Malonesterderivate, wie z. B. 4-Methoxy-benzylidenmalonsäuredimethylester, 4-Methoxybenzylidenmalonsäurediethylester und 4-Butoxy-benzylidenmalonsäuredimethylester. Diese Lichtstabilisatoren können sowohl einzeln als auch in beliebigen Kombinationen untereinander zum Einsatz kommen.

Geeignete Antioxidantien C) sind beispielsweise die bekannten sterisch gehinderten Phenole, wie z. B. 2,6-Di-tert-butyl-4-methylphenol (Ionol), Pentaerythrit-tetrakis(3-(3,5-di-tert-butyl-4-hydroxyphenyl)propionat), Octadecyl-3-(3,5-di-tert-butyl-4-hydroxyphenyl)-propionat, Triethylenglykol-bis(3-tert-butyl-4-hydroxy-5-methylphenyl)propionat, 2,2'-Thio-bis(4-methyl-6-tert-butylphenol), 2,2'-Thiodiethyl-bis[3-(3,5-di-tert-butyl-4-hydroxyphenyl)propionat), die sowohl einzeln als auch in beliebigen Kombinationen untereinander zum Einsatz kommen.

Weitere, gegebenenfalls mitzuverwendende Hilfs- und Zusatzmittel C) sind beispielsweise Zellregler der an sich bekannten Art, wie z. B. Paraffine oder Fettalkohole, die bekannten Flammschutzmittel, wie z.B. Tris-chlorethylphosphat, Ammoniumphosphat oder -polyphosphat, Füllstoffe, wie z. B. Bariumsulfat, Kieselgur, Russ, Schlämmkreide oder auch verstärkend wirkende Glasfasern. Schliesslich können beim erfindungsgemäßen Verfahren gegebenenfalls auch die an sich bekannten inneren Formtrennmittel Farbstoffe, Pigmente, Hydrolyseschutzmittel, fungistatische und bakteriostatisch wirkende Substanzen mitverwendet werden.

Die genannte, gegebenenfalls mitzuverwendende Hilfs- und Zusatzmittel C) können sowohl der Polyisocyanatkompente A) und/oder der gegenüber Isocyanatgruppen reaktiven Komponente B) zugemischt werden.

Zur Herstellung der erfindungsgemäßen lichtechten Körper aus Polyurethanmassen werden die monomerenarmen Polyisocyanate A) mit der gegenüber Isocyanatgruppen reaktiven Komponente B), gegebenenfalls unter Mitverwendung der vorstehend genannten Hilfs- und Zusatzmittel C), in lösemittelfreier Form im oben angegebenen Äquivalentverhältnis von Isocyanatgruppen zu gegenüber Isocyanaten reaktiven Gruppen mit Hilfe geeigneter Mischaggregate gemischt und nach beliebigen Methoden, in offenen oder geschlossenen Formen, beispielsweise durch einfaches Vergießen von Hand, bevorzugt aber mit Hilfe geeigneter Maschinen, wie z. B. den in der Polyurethantechnologie üblichen Niederdruck- oder Hochdruckmaschinen oder nach dem RIM-Verfahren, in einem Temperaturbereich von 40 bis 180°C, vorzugsweise von 50 bis 140°C, besonders bevorzugt von 60 bis 120°C, und gegebenenfalls unter einem erhöhten Druck von bis zu 300 bar, vorzugsweise bis 100 bar, besonders bevorzugt bis zu 40 bar ausgehärtet.

Dabei werden die Polyisocyanate A) und gegebenenfalls auch die Ausgangskomponenten B) zur Verringerung der Viskositäten auf eine Temperatur von mindestens 50°C, besonders bevorzugt mindestens 60°C, vorgeheizt und gegebenenfalls durch Anlegen von Vakuum entgast.

In der Regel können die so aus den erfindungsgemäß hergestellten bzw. verwendbaren Polyurethanmassen gefertigten Körper nach kurzer Zeit, bespielsweise nach einer Zeit von 2 bis 60 min, entformt werden. Gegebenenfalls kann sich eine Nachhärtung bei einer Temperatur von 50 bis 100 °C, vorzugsweise bei 60 bis 90°C, anschließen.

Auf diese Weise erhält man kompakte oder geschäumte, licht- und wetterbeständige Polyurethankörper, die sich durch eine hohe Beständigkeit gegenüber Lösungsmitteln und Chemikalien sowie hervorragende mechanische Eigenschaften, insbesondere eine exzellente Wärmeformbeständigkeit auch bei höheren Temperaturen von beispielsweise 90°C, auszeichnen.

Bevorzugt finden die monomerenarmen araliphatischen Polyisocyanate A) zur Herstellung kompakter transparenter Formkörper Verwendung. Diese transparenten Polyurethankörper eignen sich für eine Vielzahl unterschiedlicher Anwendungen, beispielsweise zur Herstellung von bzw. als Glasersatz-Scheiben, wie z. B. Sonnendächern, Front-, Heck- oder Seitenscheiben im Fahrzeug- oder Flugzeugbau, sowie als Sicherheitsglas.

Die erfindungsgemäßen Polyurethanmassen eignen sich darüber hinaus auch hervorragend zum transparenten Verguss optischer, elektronischer oder optoelektronischer Bauteile, wie z. B. von Solarmodulen, Leuchtdioden oder von Linsen oder Kollimatoren, wie sie beispielsweise als Vorsatzoptik in LED-Leuchten oder Automobilscheinwerfern zum Einsatz kommen.

Besonders bevorzugtes Einsatzgebiet für die aus den monomerenarmen araliphatischen Polyisocyanaten A) erhältlichen erfindungsgemäßen Polyurethanmassen ist aber die Herstellung leichtgewichtiger Kunststoff-Brillengläser mit hohem Brechungsindex und hoher Abbe-Zahl. Erfindungsgemäß hergestellte Brillengläser zeichnen sich durch hervorragende mechanische Eigenschaften, insbesondere Härte und Schlagfestigkeit sowie gute Kratzfestigkeit aus und sind darüber hinaus leicht zu bearbeiten und beliebig einfärbbar.

### Beispiele

Alle Prozentangaben beziehen sich, soweit nichts Anderslautendes vermerkt, auf das Gewicht.

Die Bestimmung der NCO-Gehalte erfolgte titrimetrisch nach DIN EN ISO 11909.

OH-Zahlen wurden titrimetrisch in Anlehnung an DIN 53240 T.2, Säure-Zahlen nach DIN 3682 bestimmt.

Die Rest-Monomeren Gehalte wurden nach DIN EN ISO 10283 gaschromatographisch mit internem Standard gemessen.

Sämtliche Viskositätsmessungen erfolgten mit einem Physica MCR 51 Rheometer der Fa. Anton Paar Germany GmbH (DE) nach DIN EN ISO 3219.

Die Glasübergangstemperatur Tg wurde mittels DSC (Differential Scanning Calorimetrie) mit einem Mettler DSC 12E (Mettler Toledo GmbH, Giessen, DE) bei einer Aufheizgeschwindigkeit von 20 °C/min bestimmt.

Shore-Härten wurden nach DIN 53505 mit Hilfe eines Shore-Härteprüfgerätes Zwick 3100 (Fa. Zwick, DE) gemessen.

Die Messung der Brechungsindices und Abbe-Zahlen erfolgte an einem Abbe-Refraktometer Modell B der Fa. Zeiss.

### Ausgangsverbindungen

### Polyisocyanat A1)

Nach dem in EP-A 0 157 088, Beispiel 6 beschriebenen Verfahren wurden 2256 g (12 mol) 1,3-Bis(isocyanatomethyl)benzol (m-XDI) in Gegenwart von 46,5 g (0,25 mol) Pivalinsäureanhydrid und 200 g Triethylphosphat mit 18 g (1 mol) Wasser zu einem Biuretpolyisocyanat umgesetzt. Überschüssiges m-XDI wurde anschließend durch Dünnschichtdestillation bei einer Temperatur von 150°C und einem Druck von 0,1 mbar entfernt. Man erhielt ein hochviskoses schwach gelb gefärbtes Harz.

| | |
|---|---|
| NCO-Gehalt: | 21,1 % |
| NCO-Funktionalität: | 3,3 |
| Monomeres m-XDI: | 0,3 % |
| Viskosität (23°C): | 182.000 mPas |
| Viskosität (60°C): | 1.500 mPas |

### Polyisocyanate A2)

940 g (5,0 mol) m-XDI wurden bei Raumtemperatur unter Stickstoff und Rühren mit 1,4 g (7 mmol) Tributylphosphin als Katalysator versetzt und anschließend auf 60°C erwärmt. Nach ca. einer Stunde war der NCO-Gehalt der Mischung auf 26,4 % gesunken und die Reaktion wurde durch Zugabe von 1,3 g (7 mmol) Toluolsulfonsäuremethylester und einstündiges Erhitzen auf 80°C abgebrochen. Nach Abtrennen des nicht umgesetztes überschüssigen m-XDI durch Dünnschichtdestillation bei einer Temperatur von 150°C und einem Druck von 0,1 mbar erhielt man ein Isocyanurat- und Uretdiongruppen enthaltendes Polyisocyanat in Form eines glasartigen fast farblosen Harzes.

| | |
|---|---|
| NCO-Gehalt: | 17,4 % |
| NCO-Funktionalität: | 2,4 |
| Monomeres m-XDI: | 0,2 % |
| Viskosität (60°C): | 6.800 mPas |

### Polyisocyanate A3)

Isocyanurat- und Iminoxadiazindiongruppen enthaltendes m-XDI-Polyisocyanat, hergestellt nach dem in Beispiel 4 der EP-A 0 962 455 beschriebenen Verfahren durch Trimeriserung von m-XDI unter Verwendung einer 50 %-igen Lösung von Tetrabutylphosphoniumhydrogendifluorid in Isopropanol/Methanol (2:1) als Katalysator und Reaktionsstoppung bei einem NCO-Gehalt der Rohmischung von 36 % durch Zugabe von Dibutylphosphat. Nach Abtrennung des nicht umgesetzten m-XDI durch Dünnschichtdestillation bei einer Temperatur von 150°C und einem Druck von 0,1 mbar erhielt man ein glasartiges festes Harz mit folgenden Kenndaten:

| | |
|---|---|
| NCO-Gehalt: | 20,4 % |
| NCO-Funktionalität: | 3,2 |
| Monomeres m-XDI: | 0,1 % |
| Viskosität (60°C): | 8.500 mPas |

### Hydroxyfunktioneller Reaktionspartner B1)

Lösemittelfreies Polyesterpolyol, hergestellt wie in WO 2010/083958 unter Ausgangsverbindungen als hydroxyfunktioneller Reaktionspartner B1) beschrieben.

| | | |
|---|---|---|
| Viskosität (23 °C): | 19900 mPas | |
| OH-Zahl: | 628 mg KOH/g | |
| Säurezahl: | 2,2 mg KOH/g | |
| OH-Funktionalität: | 2,6 | |
| Mittleres Molekulargewicht: | 243 g/mol | (aus OH-Zahl berechnet) |

### Mercaptofunktioneller Reaktionspartner B2)

Pentaerythrit-tetrakis(3-mercaptopropionat) (= THIOCURE^{®} PETMP, Bruno Bock, DE)

| | |
|---|---|
| Äquivalentgewicht: | 122,2 g/val SH |

### Beispiele 1 bis 8 (Herstellung von Polyurethan-Vergussmassen)

Zur Herstellung von Vergussmassen wurden die monomerenarmen Polyisocyanate A) und Polyolkomponenten B) auf 60°C vorgewärmt in den in Tabelle 1 angegebenen Kombinationen und Mengenverhältnissen (Gew.-Teile), jeweils entsprechend einem Äquivalentverhältnis von Isocyanatgruppen zu gegenüber Isocyanaten reaktiven Gruppen von 1 : 1, mit Hilfe eines Speed-Mixers DAC 150 FVZ (Firma Hauschild, DE) 1 Min bei 3500 U/Min homogenisiert und anschliessend von Hand in offene, nicht beheizte Polypropylen-Formen gegossen. Nach 24 Stunden Aushärtung bei 70°C in einem Trockenschrank wurden die Prüfkörper (Durchmesser 50 mm, Höhe 5 mm) entformt.

Nach einer Nachhärtezeit von weiteren 24 Stunden bei Raumtemperatur wurden die Prüfkörper auf ihre mechanischen und optischen Eigenschaften getestet. Die Prüfergebnisse finden sich ebenfalls in der nachfolgenden Tabelle.

| **Beispiel** | **1** | **2** | **3** | **4** | **5** | **6** |
|---|---|---|---|---|---|---|
| Polyisocyanat A1) | 69,0 | - | - | 62,0 | - | - |
| Polyisocyanat A2) | - | 73,0 | - | - | 66,4 | - |
| Polyisocyanat A3) | - | - | 69,8 | - | - | 62,8 |
| Reaktionspartner B1) | 31,0 | 27,0 | 30,2 | - | - | - |
| Reaktionspartner B2) | - | - | - | 38,0 | 33,6 | 37,2 |
| Aussehen | Klar | Klar | Klar | Klar | Klar | Klar |
| Tg [°C] | 116 | 102 | 133 | 123 | 117 | 123 |
| Shore-Härte D | 84 | 89 | 91 | 90 | 88 | 89 |
| Brechungsindex *n_{D}²⁰* | 1,5769 | 1,5801 | 1,5782 | 1,6080 | 1,6113 | 1,5995 |
| Abbe-Zahl | 39 | 38 | 40 | 37 | 38 | 36 |

## Patentansprüche

1. Verwendung lösemittelfreier Polyisocyanatkomponenten A), die auf eine Temperatur von mindestens 50 °C vorgeheizt sind und, aus mindestens zwei Molekülen 1,3-Bis(isocyanatomethyl)benzol aufgebaut sind und einen Gehalt an Isocyanatgruppen von 10 bis 22 Gew.-% sowie einen Gehalt an monomeren Diisocyanaten von weniger als 1,0 Gew.-% aufweisen, zur Herstellung lichtechter kompakter oder geschäumter Polyurethankörper.

2. Verwendung gemäß Anspruch 1, **dadurch gekennzeichnet, dass** die Polyisocyanatkomponenten A) Uretdion-, Allophanat-, Isocyanurat-, Iminooxadiazindion- und/oder Biuretstrukturen aufweist.

3. Verwendung gemäß Anspruch 1 und 2, **dadurch gekennzeichnet, dass** die Polyisocyanatkomponente A) einen Gehalt an Isocyanatgruppen von 11 bis 21,5 Gew.-% und einem Gehalt an monomeren Diisocyanaten von weniger als 0,8 % aufweist.

4. Verwendung gemäß Anspruch 3, **dadurch gekennzeichnet, dass** die Polyisocyanatkomponente A) einen Gehalt an Isocyanatgruppen von 15 bis 21 Gew.-% und einem Gehalt an monomerem Diisocyanat von weniger als 0,5 % aufweist.

5. Verwendung gemäß Anspruch 1 bis 4, **dadurch gekennzeichnet, dass** bei der Herstellung der Polyisocyanatkomponenten A) das nicht umgesetzte monomere araliphatische Diisocyanat durch Extraktion oder Dünnschichtdestillation vom Reaktionsprodukt abgetrennt wird.

6. Verwendung gemäß Anspruch 1 zur Herstellung kompakter transparenter Polyurethankörper.

7. Verwendung gemäß Anspruch 6, **dadurch gekennzeichnet, dass** es sich bei den Polyurethankörpern um Glasersatzteile handelt.

8. Verwendung gemäß Anspruch 6, **dadurch gekennzeichnet, dass** es sich bei den Polyurethankörpern um optische, optoelektronische oder elektronische Bauteile handelt.

9. Verwendung gemäß Anspruch 6, **dadurch gekennzeichnet, dass** es sich bei den Bauteilen um optische Linsen oder Brillengläser handelt.

10. Verwendung gemäß Anspruch 6, **dadurch gekennzeichnet, dass** es sich bei den Bauteilen um Leuchtdioden handelt.

11. Verfahren zur Herstellung lichtechter Polyurethankörper durch lösemittelfreie Umsetzung von
A) einer Polyisocyanatkomponente, die auf eine Temperatur von mindestens 50 °C vorgeheizt ist, aus mindestens zwei Molekülen 1,3-Bis(isocyanatomethyl)benzol aufgebaut ist und einen Gehalt an Isocyanatgruppen von 10 bis 22 Gew.-% sowie einen Gehalt an monomeren Diisocyanaten von weniger als 1,0 Gew.-% aufweist, mit
B) gegenüber Isocyanatgruppen reaktiven Reaktionspartnern einer mittleren Funktionalität von 2,0 bis 6,0 und gegebenenfalls unter Mitverwendung
C) weiterer Hilfs- und Zusatzmittel,
unter Einhaltung eines Äquivalentverhältnisses von Isocyanatgruppen zu gegenüber Isocyanaten reaktiven Gruppen von 0,5 : 1 bis 2,0 : 1.

12. Verfahren gemäß Anspruch 11, **dadurch gekennzeichnet, dass** als Komponente C) Katalysatoren, UV-Stabilisatoren, Antioxidantien und/oder Formtrennmittel eingesetzt werden.

13. Verfahren gemäß Anspruch 11, **dadurch gekennzeichnet, dass** die Umsetzung der Reaktionspartner in einem Temperaturbereich von 40°C bis 180°C und eine m Druck von bis zu 300 bar in einer offenen oder geschlossenen Form durchgeführt wird.

## Claims

1. Use of solvent-free polyisocyanate components A) which are preheated to a temperature of at least 50 °C and which are built up from at least two molecules 1,3-bis(isocyanatomethyl)benzene and have a content of isocyanate groups of from 10 to 22 wt.% and a content of monomeric diisocyanates of less than 1.0 wt.% for the production of light-fast compact or foamed polyurethane bodies.

2. Use according to claim 1, **characterized in that** the polyisocyanate components A) have uretdione, allophanate, isocyanurate, iminooxadiazinedione and/or biuret structures.

3. Use according to claim 1 and 2, **characterized in that** the polyisocyanate components A) have a content of isocyanate groups of from 11 to 21.5 wt.% and a content of monomeric diisocyanates of less than 0.8 %.

4. Use according to claim 3, **characterized in that** the polyisocyanate components A) have a content of isocyanate groups of from 15 to 21 wt.% and a content of monomeric diisocyanate of less than 0.5 %.

5. Use according to claim 1 to 4, **characterized in that** in the preparation of the polyisocyanate components A), the unreacted monomeric araliphatic diisocyanate is removed from the reaction product by extraction or thin film distillation.

6. Use according to claim 1 for the production of compact transparent polyurethane bodies.

7. Use according to claim 6, **characterized in that** the polyurethane bodies are glass substitute parts.

8. Use according to claim 6, **characterized in that** the polyurethane bodies are optical, optoelectronic or electronic components.

9. Use according to claim 6, **characterized in that** the components are optical lenses or spectacle lenses.

10. Use according to claim 6, **characterized in that** the components are light-emitting diodes.

11. Process for the production of light-fast polyurethane bodies by solvent-free reaction of
A) a polyisocyanate component which is preheated to a temperature of at least 50 °C, built up from at least two molecules 1,3-bis(isocyanatomethyl)benzene and has a content of isocyanate groups of from 10 to 22 wt.% and a content of monomeric diisocyanates of less than 1.0 wt.%, with
B) reaction partners which are reactive towards isocyanate groups and have an average functionality of from 2.0 to 6.0, and optionally co-using
C) further auxiliary substances and additives,
maintaining an equivalent ratio of isocyanate groups to groups which are reactive towards isocyanates of from 0.5 : 1 to 2.0 : 1.

12. Process according to claim 11, **characterized in that** catalysts, UV stabilizers, antioxidants and/or mould release agents are employed as component C.

13. Process according to claim 11, **characterized in that** the reaction of the reaction partners is carried out in a temperature range from 40 °C to 180 °C and under a pressure of up to 300 bar in an open or closed mould.

## Revendications

1. Utilisation de composants polyisocyanate A) sans solvant, qui sont préchauffés à une température d'au moins 50°C et qui sont constitués d'au moins deux molécules de 1,3-bis(isocyanatométhyl)benzène et présentent une teneur en groupes isocyanate de 10 à 22 % en poids ainsi qu'une teneur en diisocyanates monomères de moins de 1,0 % en poids, pour la production de corps en polyuréthane compacts ou expansés, résistants à la lumière.

2. Utilisation selon la revendication 1, **caractérisée en ce que** les composants polyisocyanate A) comportent des structures urétdione, allophanate, isocyanurate, imino-oxadiazinedione et/ou biuret.

3. Utilisation selon la revendication 1 et la revendication 2, **caractérisée en ce que** le composant polyisocyanate A) a une teneur en groupes isocyanate de 11 à 21,5 % en poids et une teneur en diisocyanates monomères de moins de 0,8 %.

4. Utilisation selon la revendication 3, **caractérisée en ce que** le composant polyisocyanate A) a une teneur en groupes isocyanate de 15 à 21 % en poids et une teneur en diisocyanate monomère de moins de 0,5 %.

5. Utilisation selon l'une quelconque des revendications 1 à 4, **caractérisée en ce que** dans la préparation des composants polyisocyanate A) on sépare par extraction ou distillation en couche mince le diisocyanate araliphatique monomère n'ayant pas réagi d'avec le produit de réaction.

6. Utilisation selon la revendication 1 pour la production de corps en polyuréthane transparents compacts.

7. Utilisation selon la revendication 6, **caractérisée en ce que** pour ce qui concerne les corps en polyuréthane il s'agit de pièces remplaçant le verre.

8. Utilisation selon la revendication 6, **caractérisée en ce que** pour ce qui concerne les corps en polyuréthane il s'agit de composants optiques, optoélectroniques ou électroniques.

9. Utilisation selon la revendication 6, **caractérisée en ce que** pour ce qui concerne les composants il s'agit de lentilles optiques ou de verres de lunettes.

10. Utilisation selon la revendication 6, **caractérisée en ce que** pour ce qui concerne les composants il s'agit de diodes électroluminescentes.

11. Procédé pour la production de corps en polyuréthane résistants à la lumière, par mise en réaction sans solvant
A) d'un composant polyisocyanate qui est préchauffé à une température d'au moins 50°C et qui est constitué d'au moins deux molécules de 1,3-bis(isocyanatométhyl)benzène et présente une teneur en groupes isocyanate de 10 à 22 % en poids ainsi qu'une teneur en diisocyanates monomères de moins de 1,0 % en poids, avec
B) des partenaires réactionnels réactifs vis-à-vis de groupes isocyanate, ayant une fonctionnalité moyenne de 2,0 à 6,0 et éventuellement avec utilisation simultanée
C) d'autres adjuvants et additifs,
avec maintien d'un rapport d'équivalents des groupes isocyanate aux groupes réactifs vis-à-vis d'isocyanates de 0,5 : 1 à 2,0 : 1.

12. Procédé selon la revendication 11, **caractérisé en ce qu'**on utilise comme composant C) des catalyseurs, des stabilisants UV, des antioxydants et/ou des agents de démoulage.

13. Procédé selon la revendication 11, **caractérisé en ce qu'**on effectue la réaction des partenaires réactionnels dans une plage de température de 40 °C à 180 °C et sous une pression de jusqu'à 300 bars sous forme ouverte ou fermée.
